# EUROPÄISCHE PATENTSCHRIFT

(11) **EP 1 663 698 B1**
(45) Veröffentlichungstag und Bekanntmachung des Hinweises auf die Patenterteilung: **20.07.2011**
(21) Anmeldenummer: 04764955.3
(22) Anmeldetag: 08.09.2004
(51) Int. Cl.: B60N 2/02, B60N 2/30, B60N 2/36, B60R 7/04, B60R 21/06

(54) **FAHRZEUGSITZ MIT LADESTELLUNG**
VEHICLE SEAT FEATURING A LOADING POSITION
SIEGE DE VEHICULE A POSITION DE CHARGEMENT

(30) Priorität: 12.09.2003 DE 10342614
(43) Veröffentlichungstag der Anmeldung: 07.06.2006
(73) Patentinhaber: Johnson Controls GmbH, 51399 Burscheid (DE)
(72) Erfinder: ABRAHAM, James, 51399 Burscheid (DE)
(74) Vertreter: Hemmelmann, Klaus
(86) Internationale Anmeldenummer: PCT/EP2004/010012
(87) Internationale Veröffentlichungsnummer: WO 2005/025925

(56) Entgegenhaltungen:
- DE-A- 10 053 049
- DE-A- 19 533 932
- DE-A- 19 959 895
- FR-A- 2 707 934
- GB-A- 2 095 984
- US-A- 4 368 916
- US-A1- 2002 005 649
- PATENT ABSTRACTS OF JAPAN Bd. 1998, Nr. 14, 31. Dezember 1998 (1998-12-31) -& JP 10 236190 A (MITSUBISHI MOTORS CORP), 8. September 1998 (1998-09-08)

## Beschreibung

Die Erfindung betrifft einen Fahrzeugsitz, insbesondere einen Rücksitz für ein Kraftfahrzeug, mit einem Sitzteil und einer relativ zu diesem verlagerbaren Rückenlehne, welche gegenüber dem Sitzteil einerseits in Sitzrichtung von einer Gebrauchsstellung in eine erste Nichtgebrauchsstellung verschieblich und andererseits aus einer Gebrauchsstellung in eine weitere Nichtgebrauchsstellung schwenkbar angeordnet ist

### Stand der Technik

Ein gattungsgemäßer Fahrzeugsitz wird in der FR 2 707 934 A1 (Figuren 8-10) offenbart.

Ein weiterer Fahrzeugsitz wird in der Druckschrift DE 195 33 932 C2 offenbart. Der Sitz besteht aus einem Sitzteil und einer Rückenlehne, welche an einem Schlitten schwenkbar angelenkt ist und durch den Schlitten ferner relativ zum Sitzteil verschoben werden kann. Durch diese Verschiebung lassen sich einerseits verschiedene Gebrauchsstellungen mit unterschiedlich langer Auflagefläche auf dem Sitzteil einstellen, andererseits kann die Rückenlehne nach dem Klappen des Sitzteils in eine aufrechte Stauposition nach vorne in eine Ladestellung verschoben werden. Dabei wird die Rückenlehne im schlittenseitigen Gelenk zur Vergrößerung des Ladevolumens aus ihrer üblicherweise leicht nach hinten geneigten Gebrauchsstellung in eine genau vertikale Stellung verschwenkt.

In dieser Stellung wird ein Laderaum mit optimaler Höhenn utzung geschaffen. Beim Transport langer Güter hingegen kann das Paket aus Sitzteil und Rückenlehne störend wirken.

Einen ähnlichen Fahrzeugsitz, allerdings mit einer mittels eines Schlitten längsverschieblichen, gegenüber dem Schlitten aber drehfesten Rückenlehne beschreibt DE 196 17 727 A1. Auch dieser Sitz weist naturgemäß die eingangs genannten Nachteile auf.

Ein anderer Sitz mit einer Ladestellung ist aus der Druckschrift DE 101 49 858 A1 bekannt. Er besteht aus einem Sitzteil, dass über ei n Drehgelenk mit einer Rückenlehne verbunden ist. Die Rückenlehne kann aus ihrer aufrechten Gebrauchslage nach vorne in eine Ladestellung auf das Sitzteil geklappt werden, das hierbei mittels einer Gelenkarmanordnung nach unten verlagert wird. Die robuste Rückseite der Rückenlehne bildet dabei einen niedrigen, waagerechten Ladeboden aus, der vorzugsweise mit dem Boden eines angrenzenden Kofferraums fluchtet und diesen bei Bedarf vergrößert.

Dieser Fahrzeugsitz erfüllt grundsätzlich die an ihn gestellten Aufgaben. Allerdings erfordert er einen recht aufwendigen Führungsmechanismus, ferner wird der Raum unterhalb des in Gebrauchsstellung befindlichen Sitzteils bei dessen Absenkung eingenommen und kann nicht anderweitig genutzt werden. Ferner muß gegebenenfalls die Kopfstütze von der Rückenlehne entfernt oder abgesenkt werden, bevor die Rückenlehne nach vorne geklappt wird, sofern andernfalls eine Kollision mit einem davor befindlichen Sitz gegeben ist.

Aus der Praxis ist ferner bekannt, die Einheit aus Rückenlehne und Sitzteil auf in Sitzrichtung verlaufenden Sitzschienen längsverschieblich anzuordnen und aus Komfortgründen oder zu einer moderaten Vergrößerung eines angrenzenden Laderaums gesamthaft von einer hinteren in eine vordere Gebrauchsstellung zu verschieben.

Eine umfassende Vergrößerung des Ladevolumens kann hierdurch jedoch nicht herbeigeführt werden. Ferner wird der zugeordnete Fußraum beim Verschieben in die vordere Gebrauchsstellung zwangsläufig verkleinert.

### Aufgabe

Der Erfindung liegt die Aufgabe zugrunde, einen variablen, einfach gestalteten Fahrzeugsitz mit geringem Raumbedarf bereitzustellen.

### Lösung

Die Aufgabe wird erfindungsgemäß durch die Merkmale des Anspruchs 1 gelöst.

Vorzugsweise ist es darüber hinaus möglich, durch Verschieben der Rückenlehne von einer hinteren Gebrauchsstellung in Sitzrichtung in mindestens eine vordere Gebrauchsstellung den Laderaum geringfügig zu vergrößern oder eine Komfortverbesserung zu erzielen. Diese Vorzüge sind insbesondere dann von Bedeutung, wenn die Länge des Sitzteils nicht mit der Oberschenkellänge (kleinwüchsiger) Sitzinsassen harmoniert. Vorzugsweise erstreckt sich unterhalb des Sitzteils mindestens eine Sitzschiene, in welcher ein Schlittenstück der Rückenlehne verschieblich geführt ist. Die Sitzschiene ist bei dieser Anordnung in Gebrauchsstellung des Fahrzeugsitzes verdeckt, so dass beim Verschieben der Rückenlehne keine Verletzungsgefahr für die Sitzinsassen besteht.

Das Sitzteil weist dabei mit Vorteil in seinem hinteren Bereich mindestens eine Ausnehmungen auf, in welcher ein das Schlittenstück mit der Rückenlehne verbindenes Beschlagsstück, vorzugsweise in Form eines vertikal und in Sitzrichtung ausgerichteten Blechteils, bewegbar ist.

Besonders günstig ist die Anordnung von zwei Sitzschienen, die beidseits des Sitzteils verlaufen, wobei die Ausnehmungen an den seitlichen Kanten des Sitzteils ausgebildet sind. Durch diese Ausbildung wird sowohl eine vorteilhafte Einleitung von Kräften aus der Rückenlehne als auch eine einfache Gestaltung des Polsters des Sitzteils bewirkt.

Vorzugsweise ist mindestens ein Schlittenstück in der Sitzschiene verriegelbar, so dass eine unmittelbare Arretierung der Rückenlehne an der Karosserie des Fahrzeugs nicht erforderlich ist. Ferner kann die Rückenlehne ohne größeren Aufwand so gestaltet werden, dass sie neben einer vorderen und einer hinteren Gebrauchsstellung weitere, gegebenenfalls sogar beliebig viele Zwischenstellungen einnehmen kann, in denen gleichfalls ein Gebrauch des Sitzes möglich ist. Zur Durchführung dieser bevorzugten Ausführung kann beispielsweise eine herkömmliche Sitzunterschiene eines Sitzlängsverstellers verwendet werden, in welche eine gekürzte Sitzoberschiene eingesetzt wird. Dabei ist die Sitzunterschiene üblicherweise mit einer linearen Zahnanordnung versehen, in welcher eine Gegenverzahnung der Sitzoberschiene lösbar einrastet, wobei die Längsverstellung händisch erfolgt. Bei hochwertigen Fahrzeugausstattungen ist auch eine elektromotorische Verstellung möglich, beispielsweise mittels eines Spindelantriebs.

Die Drehung des Sitzteils kann beispielsweise manuell, unterstützt durch eine zuvor gespannte Feder oder elektromotorisch erfolgen.

Die Sitzschienen sind vorzugsweise bündig in den Ladeboden eingelassen, so dass sie das Verstauen des Ladung nicht behindern. Ferner können sie bei entsprechender Gestaltung Zusatzausstattungen, beispielsweise ein Cargo-Management-System, aufnehmen.

In der ersten Ladestellung des Fahrzeugsitzes entsteht somit ein Laderaum mit niedrigem Ladeboden, der vorzugsweise stufenlos in den Boden eines angrenzenden Kofferraums übergeht.

Mit besonderem Vorteil ist die Rückenlehne zusätzlich auf das in Gebrauchsstellung befindliche Sitzteil in die zweite Ladestellung klappbar, bei welcher das Ladegut auf die Rückseite der Rückenlehne auflegt werden kann. Gegenüber der ersten Ladestellung ist die Ladung auf einem höher gelegenen Boden gestaut, dafür steht jedoch ein um die Dicke von Sitzteil und Rückenlehne verlängerter, für den Transport von Langgut besonders günstiger Laderaum zur Verfügung.

Falls mindestens zwei erfindungsgemäße Fahrzeugsitze nebeneinander angeordnet sind, können diese unabhängig voneinander auch in unterschiedliche Ladestellungen überführt werden, so dass eine besonders flexible Gestaltung des Laderaums ermöglicht wird.

Neben einer Klappfunktion kann im Bereich der Drehachse der Rücken lehne auch eine Winkelverstellung zur Komfortverbesserung vorgesehen werden, die entweder im gleichen oder einem zusätzlichen Gelenk erfolgt.

Da ein Absenken des Sitzteils in keiner Stellung erforderlich ist, kann zwischen Sitzteil und Fahrzeugboden ein vom Fußraum her zugängliches Staufach angeordnet werden, dessen Oberseite den Ladeboden bildet.

### Figuren

Die Figuren stellen beispielhaft und schematisch eine Ausführung der Erfindung dar.

Es zeigen:
- Fig. 1: einen erfindungsgemäßen Fahrzeugsitz in einer ersten Gebrauchsstellung in seitlicher Ansicht
- Fig. 2: den Fahrzeugsitz nach Fig. 1 in einer zweiten Gebrauchs- stellung
- Fig. 3, 4: den gleichen Fahrzeugsitz beim bzw. nach dem Überführen des Sitzteils in seine Nichtgebrauchsstellung
- Fig. 5: den Fahrzeugsitz in seiner ersten Ladestellung
- Fig. 6: den gleichen Fahrzeugsitz in seiner zweiten Ladestellung
- Fig. 7.: eine perspektivische Ansicht des Fahrzeugsitzes in seiner Stellung nach Fig. 1

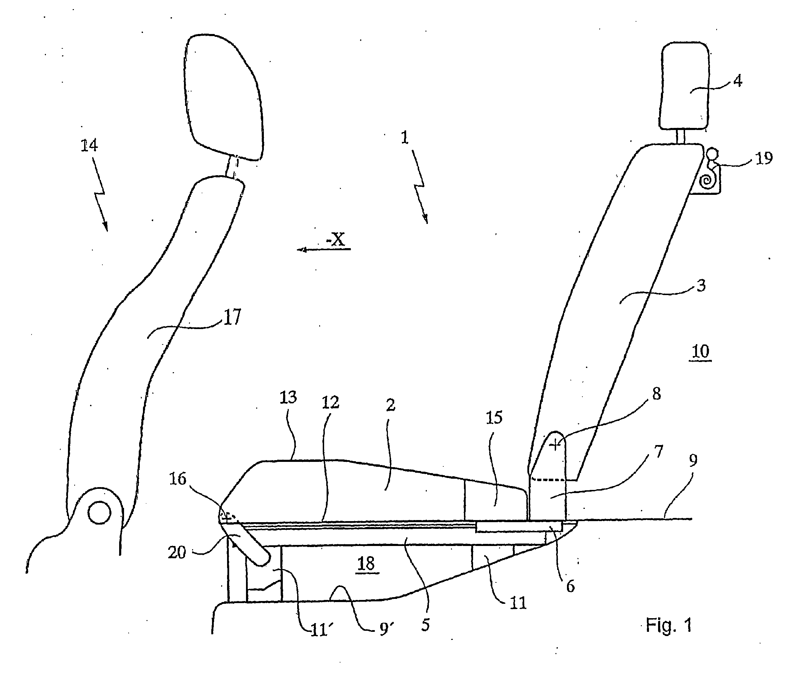

Der in Fig. 1 abgebildete Fahrzeugsitz 1, der als Rücksitz in einem Kraftfahrzeug dient, besteht aus einem Sitzteil 2 und einer Rückenlehne 3. Naturgemäß befinden sich bei normalem Gebrauch das Sitzteil 2 in einer waagerechten Stellung und die Rückenlehne 3 in einer aufrechten Position. Die Rückenlehne 3 ist ferner mit einer Kopfstütze 4 versehen.

Unterhalb des Sitzteils 2 ist eine paarige Anordnung von Sitzschienen 5 angeordnet, in denen jeweils ein Schlittenteil 6 längsverschieblich gelagert ist. Die Schlittenstücke 6 sind mit sich nach oben erstreckenden Beschlagsstücken 7 versehen, die ihrerseits über eine horizontale, quer zur Fahrtrichtung verlaufende Drehachse 8 mit der Rückenlehne 3 dreh bar verbunden sind. Im Bereich der Drehachse 8 sind nicht dargestellte, an sich aber bekannte Mittel vorgesehen, die eine Winkelverstellung der Rückenlehne 3 ermöglichen. Gleichfalls sind zwischen Sitzschiene 5 und Schlittenstück 6 übliche Einrichtungen zur Längsarretierung vorgesehen, die wahlweise vom Fahrgast- oder Kofferraum her bedienbar sind.

Die Oberkante der Sitzschienen 5 verläuft bündig zum waagerechten Boden 9 eines angrenzenden Kofferraums 10. Unterhalb des Sitzteils 2 senkt sich der Boden 9' der Fahrzeugkarosserie, der über Distanzstücke 11, 11' mit den Sitzschienen 5 verbunden ist, hingegen ab. Zwischen den Sitzschienen 5 verläuft ein Ladeboden 12, der mit den Oberkanten der Sitzschienen 5 sowie dem Boden 9 des Kofferraums 10 fluchtet.

In seiner ersten Gebrauchsstellung (Fig. 1) ist die Rückenlehne 3 in den Sitzschienen 5 bis in ihre hinterste Position verschoben, so dass die Auflagefläche 13 des Sitzteils 3 eine übliche Länge aufweist.

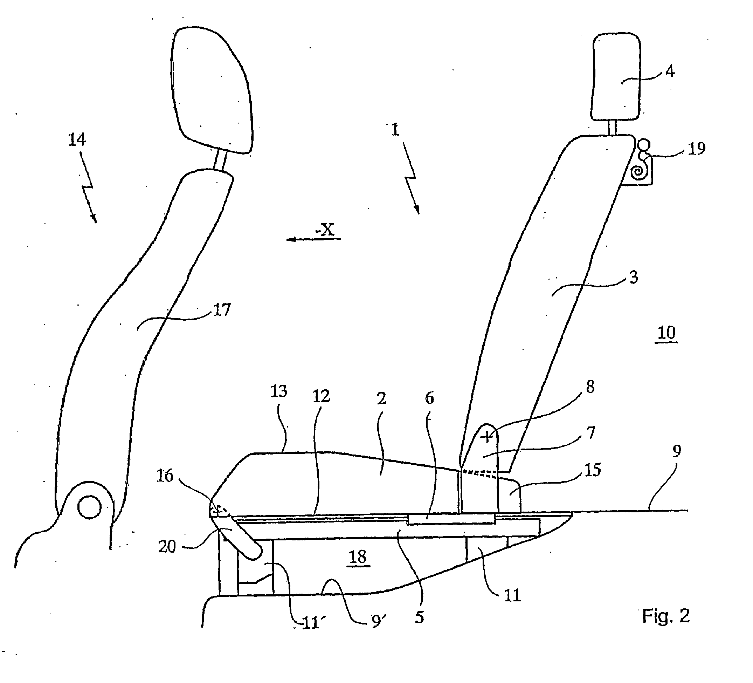

Wird eine Verkürzung der Auflagefläche 13 oder eine mäßige Verlängerung des Kofferraums 10 gewünscht, kann die Rückenlehne 3 in Fahrtrichtung (Pfeil -X) bis in ihre vorderste Gebrauchsstellung nach Fig. 2 geschoben werden, ohne dass sich der Fußraum zwischen Sitzteil 2 und Fahrersitz 14 verringert. Die Beschlagsstücke 7 bewegen sich dabei im Bereich seitlicher Ausnehmungen 15 am Sitzteil 2 vorbei.

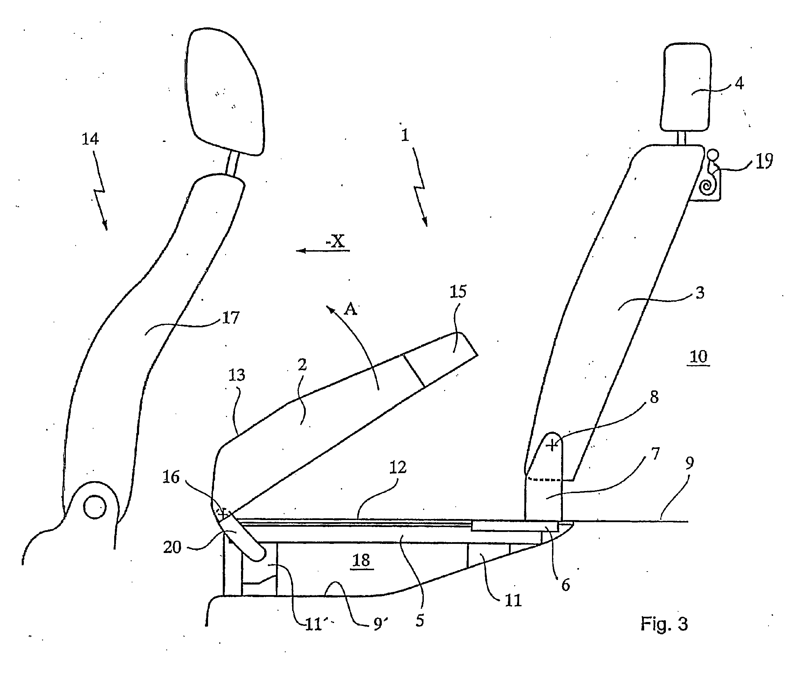

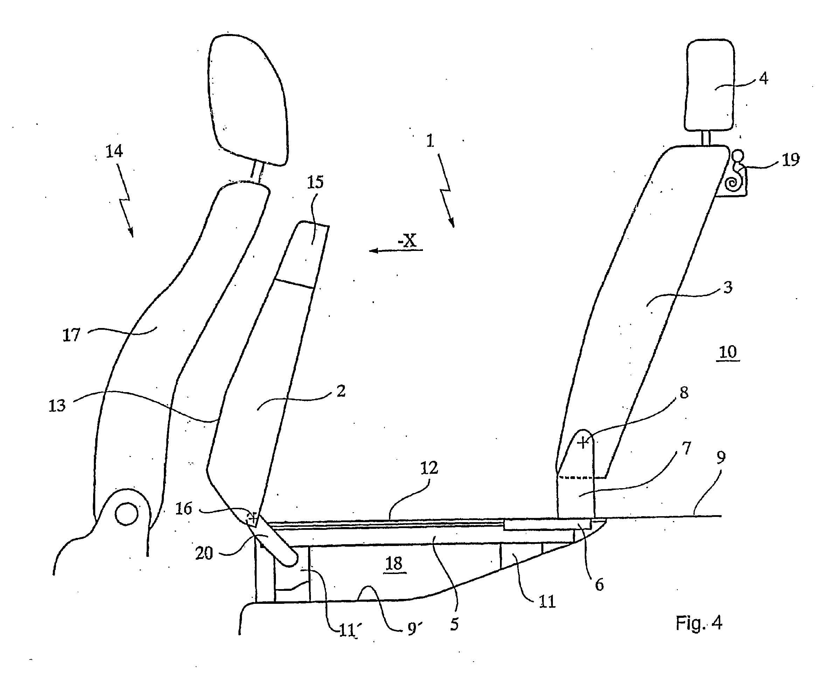

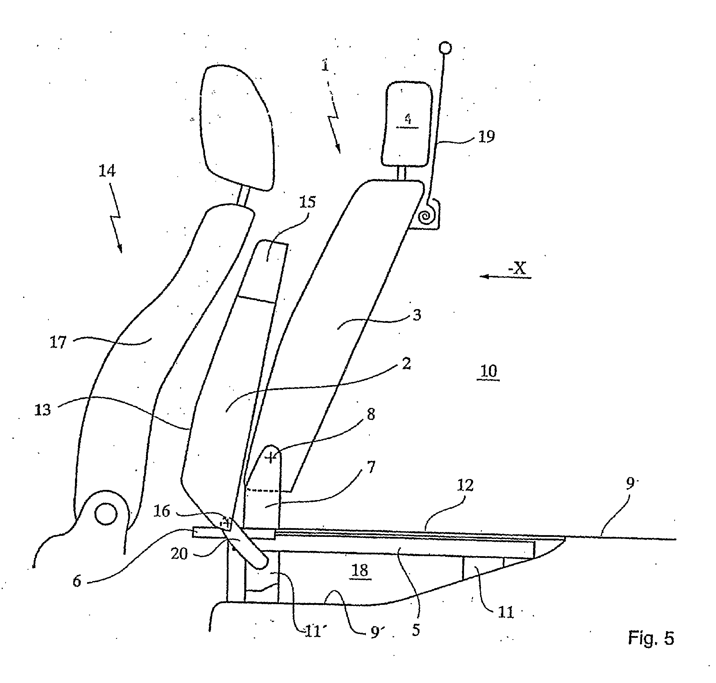

Um weiteren Raum zum Stauen von Ladung zu schaffen, kann das Sitzteil 2 mittels eines Gelenkarms 20 um ein im Bereich des vorderen Distanzstücks 11' verlaufende Drehachse 16 in Richtung des Pfeils A (Fig. 3) nach vorne in eine annähernd vertikale Nichtgebrauchsstellung (Fig. 4) geschwenkt werden, sofern sich die Rückenlehne 3 in den Sitzschienen in ihrer hintersten Position befindet. Hat das Sitzteil 2 seine Nichtgebrauchsstellung eingenommen, ist die Rückenlehne 3 in eine erste Ladestellung maximal nach vorne verschiebbar, in der sie an der Unterseite des Sitzteils 2 anliegt, wie in Fig. 5 dargestellt. Die plane Fläche des Bodens 9 des Kofferraums 10 und des freiliegenden Ladebodens 12 sind nun insbesondere zu Aufnahme schweren oder hohen Ladeguts geeignet. Das Paket aus Sitzteil 2 und Rückenlehne 3 verhindert dabei im Falle eines Unfalls ein Auftreffen des Ladeguts auf den Fahrersitz 14. Zusätzlich ist denkbar, an der Oberkante der Rückenlehne 3 ein ausrollbares Trennnetz 19 vorzusehen, dass im Dachbereich der Fahrzeugkarosserie verankert werden kann. Das gleiche Trennnetz kann selbstverständlich auch in Gebrauchsstellung des Fahrzeugsitzes 1 dem Schutz der Insassen dienen, sofern karosserieseitig entsprechende Verankerungspunkte vorgesehen sind.

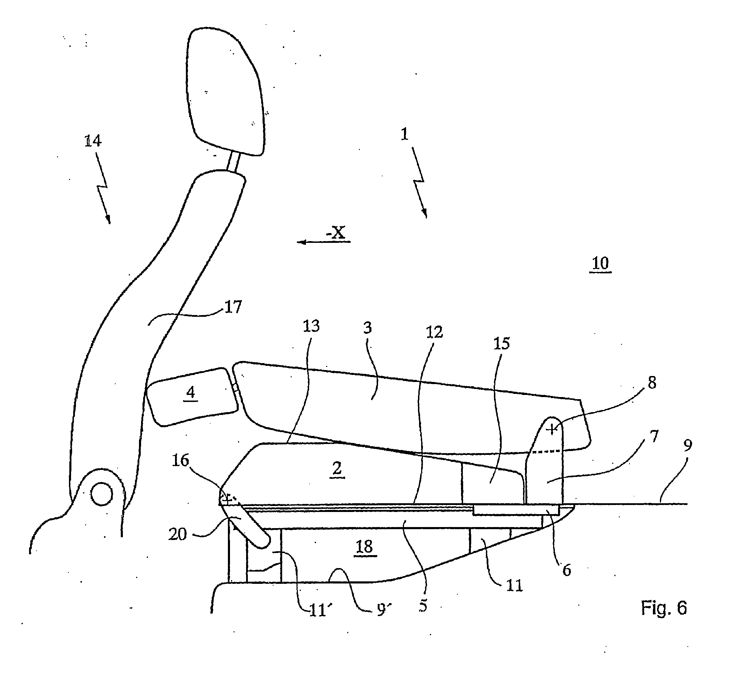

Um den Kofferraum 10 zur Aufnahme langen Ladeguts zu vergrößern, wird der Fahrzeugsitz 1 aus seiner Gebrauchsstellung nach Fig. 1 durch Umklappen der Rückenlehne 3 in seine zweite Ladestellung nach Fig. 6 überführt, bei welcher bis zur Rückenlehne 17 des Fahrersitzes 14 gestaut werden kann.

Grundsätzlich kann der Fahrzeugsitz 1 aus der Stellung nach Fig. 4 heraus auch noch in eine dritte, nicht dargestellt Ladestellung einnehmen, bei welcher die Rückenlehne 3 bei hochgeklapptem Sitzteil 2 unmittelbar auf den Ladeboden 12 heruntergeschwenkt wird.

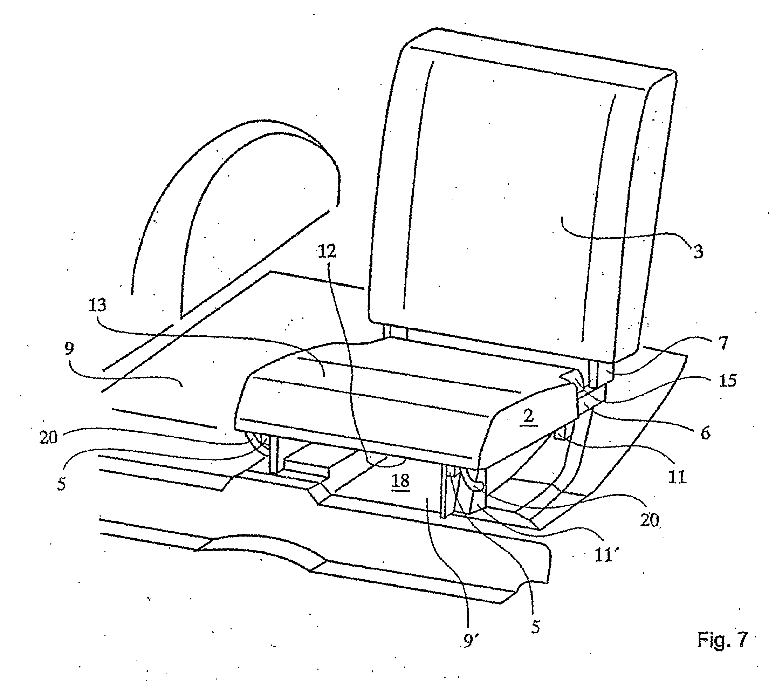

Wie aus der perspektivischen Ansicht nach Fig. 7 ersichtlich, kann unterhalb des Sitzteils 2 zwischen Ladeboden 12 und Boden 9' der Fahrzeugkarosserie ein Staufach 18 angeordnet werden, dass in Gebrauchsstellung des Fahrzeugsitzes 1 vom Innenraum des Fahrzeugs her zugänglich ist.

### Bezugszeichen

- 1: Fahrzeugsitz
- 2: Sitzteil
- 3: Rückenlehne
- 4: Kopfstütze
- 5: Sitzschiene
- 6: Schlittenstück
- 7: Beschlagsstück
- 8: Drehachse
- 9: Boden
- 10: Kofferraum
- 11: Distanzstück
- 12: Ladeboden
- 13: Auflagefläche
- 14: Fahrersitz
- 15: Ausnehmung
- 16: Drehachse
- 17: Rückenlehne
- 18: Staufach
- 19: Trennnetz
- 20: Gelenkarm

## Patentansprüche

1. Fahrzeugsitz, insbesondere Rücksitz für ein Kraftfahrzeug, mit einem Sitzteil (2) und einer relativ zu diesem verlagerbaren Rückenlehne (3), welche gegenüber dem Sitzteil (2) einerseits in Sitzrichtung von einer Gebrauchsstellung in eine erste Nichtgebrauchsstellung verschieblich und andererseits aus einer Gebrauchsstellung in eine weitere als Ladestellung ausgebildete Nichtgebrauchsstellung schwenkbar angeordnet ist, in welcher das Ladegut auf die Rückseite der Rückenlehne auflegbar ist, wobei das Sitzteil (2) seinerseits um eine horizontale, im Bereich seiner Vorderkante quer zur Sitzrichtung verlaufende Drehachse (16) in eine aufrechte Nichtgebrauchsstellung schwenkbar ist, **dadurch** gekennzeichent, dass die Rückenlehne (3) bis in den Bereich der Drehachse (16) nach vorne in eine erste Ladestellung verschiebbar ist, sobald das Sitzteil (2) in seine Nichtgebrauchsstellung geschwenkt ist.

2. Fahrzeugsitz nach Anspruch 1, **dadurch gekennzeichnet, dass** die Rückenlehne (3) von einer hinteren Gebrauchsstellung in Sitzrichtung in mindestens eine vordere Gebrauchsstellung verschiebbar ist.

3. Fahrzeugsitz nach einem der vorhergehenden Ansprüche, **dadurch gekennzeichnet, dass** sich unterhalb des Sitzteils (2) mindestens eine Sitzschiene (5) erstreckt, in welcher ein Schlittenstück (6) der Rückenlehne (3) verschieblich geführt ist.

4. Fahrzeugsitz nach Anspruch 3, **dadurch gekennzeichnet, dass** das Sitzteil (2) in seinem hinteren Bereich mindestens eine Ausnehmung (15) aufweist, in welcher ein das Schlittenstück (6) mit der Rückenlehne (3) verbindendes Beschlagsstück (7) bewegbar ist.

5. Fahrzeugsitz nach Anspruch 4, **dadurch gekennzeichnet, dass** zwei Sitzschienen (5) beidseits des Sitzteils (2) verlaufen und die Ausnehmungen (15) an den seitlichen Kanten des Sitzteils (2) ausgebildet sind.

6. Fahrzeugsitz nach einem der Ansprüche 3 bis 5, **dadurch gekennzeichnet, dass** mindestens ein Schlittenstück (6) in der Sitzschiene (5) verriegelbar ist.

7. Fahrzeugsitz nach einem der vorhergehenden Ansprüche, **dadurch gekennzeichnet, dass** die Rückenlehne (3) auf das in Gebrauchsstellung befindliche Sitzteil (2) in die zweite Ladestellung klappbar ist.

8. Fahrzeugteil nach einem der vorhergehenden Ansprüche, **dadurch gekennzeichnet, dass** zwischen Sitzteil (2) und Boden (9') der Fahrzeugkarosserie ein Staufach (18) angeordnet ist.

## Claims

1. Vehicle seat, in particular rear seat for a motor vehicle, with a seat part (2) and a backrest (3) which can be displaced relative thereto and is arranged in relation to the seat part (2) firstly in a manner such that it can be displaced in the sitting direction from an operational position into a first non-operational position and secondly in a manner such that it can be pivoted from an operational position into a further non-operational position designed as a loading position in which the item to be loaded can be placed onto the rear side of the backrest, it being possible for the seat part (2) to be pivoted in turn about a horizontal axis of rotation (16), which runs in the region of its front edge transversely to the sitting direction, into an upright non-operational position, **characterized in that** the backrest (3) can be displaced forward into the region of the axis of rotation (16) into a first loading position as soon as the seat part (2) is pivoted into its non-operational position.

2. Vehicle seat according to Claim 1, **characterized in that** the backrest (3) can be displaced in the sitting direction from a rear operational position into at least one front operational position.

3. Vehicle seat according to one of the preceding claims, **characterized in that** at least one seat rail (5) in which a slide piece (6) of the backrest (3) is displaceably guided extends below the seat part (2).

4. Vehicle seat according to Claim 3, **characterized in that** the seat part (2), in its rear region, has at least one recess (15) in which a fitting piece (7) connecting the slide piece (6) to the backrest (3) can be moved.

5. Vehicle seat according to Claim 4, **characterized in that** two seat rails (5) run on both sides of the seat part (2) and the recesses (15) are formed on the lateral edges of the seat part (2).

6. Vehicle seat according to one of Claims 3 to 5, **characterized in that** at least one slide piece (6) can be locked in the seat rail (5).

7. Vehicle seat according to one of the preceding claims, **characterized in that** the backrest (3) can be folded onto the seat part (2), which is in the operational position, into the second loading position.

8. The vehicle seat according to one of the preceding claims, **characterized in that** a storage compartment (18) is arranged between seat part (2) and floor (9') of the vehicle body.

## Revendications

1. Siège de véhicule, en particulier siège arrière pour un véhicule automobile, comprenant une partie d'assise (2) et un dossier (3) déplaçable par rapport à celle-ci, qui est disposé de manière à pouvoir pivoter par rapport à la partie d'assise (2) d'une part de manière déplaçable dans la direction du siège depuis une position d'utilisation dans une première position de non utilisation, et d'autre part depuis une position d'utilisation dans une autre position de non utilisation réalisée en tant que position de chargement, dans laquelle le produit à charger peut être placé sur le dos du dossier, la partie d'assise (2) pouvant pivoter pour sa part autour d'un axe de rotation horizontal (16) s'étendant transversalement à la direction du siège dans la région de son bord avant, dans une position de non utilisation debout, **caractérisé en ce que** le dossier (3) peut être déplacé jusque dans la région de l'axe de rotation (16) vers l'avant dans une première position de chargement, dès que la partie d'assise (2) est pivotée dans sa position de non utilisation.

2. Siège de véhicule selon la revendication 1, **caractérisé en ce que** le dossier (3) peut être déplacé d'une position d'utilisation arrière dans la direction du siège dans au moins une position d'utilisation avant.

3. Siège de véhicule selon l'une quelconque des revendications précédentes, **caractérisé en ce qu'**au moins un rail de siège (5) s'étend sous la partie d'assise (2), dans lequel est guidé de manière coulissante un organe de chariot (6) du dossier (3).

4. Siège de véhicule selon la revendication 3, **caractérisé en ce que** la partie d'assise (2) présente, dans sa région arrière, au moins un évidement (15) dans lequel peut être déplacé une pièce de ferrure (7) reliant l'organe de chariot (6) au dossier (3).

5. Siège de véhicule selon la revendication 4, **caractérisé en ce que** deux rails de siège (5) s'étendent de chaque côté de la partie d'assise (2), et les évidements (15) sont réalisés sur les bords latéraux de la partie d'assise (2).

6. Siège de véhicule selon l'une quelconque des revendications 3 à 5, **caractérisé en ce qu'**au moins un organe de chariot (6) peut être verrouillé dans le rail de siège (5).

7. Siège de véhicule selon l'une quelconque des revendications précédentes, **caractérisé en ce que** le dossier (3) peut être rabattu dans la deuxième position de chargement sur la partie d'assise (2) se trouvant en position d'utilisation.

8. Siège de véhicule selon l'une quelconque des revendications précédentes, **caractérisé en ce qu'**un compartiment de rangement (18) est disposé entre la partie d'assise (2) et le fond (9') de la carrosserie du véhicule.
